# EUROPEAN PATENT APPLICATION

(11) **EP 3 995 101 A1**
(43) Date of publication of application: **11.05.2022**
(21) Application number: 21199519.6
(22) Date of filing: 28.09.2021
(51) Int. Cl.: A61C 7/08, A61C 7/14

(54) **DENTAL BRACKET AND PATH SYSTEM AND THE METHOD FOR PRODUCTION AND INCORPORATION WITH THE CLEAR ALIGNER**

(30) Priority: 09.11.2020 HK 32020019711
(71) Applicant: Young, Yau Yau Cecilia, Kowloon (HK)
(72) Inventor: Young, Yau Yau Cecilia, Kowloon (HK)
(74) Representative: Klunker IP Patentanwälte PartG mbB

(57) **Abstract**

The present invention relates to a dental bracket and path system and the method for production and incoperation with the clear aligner, disclosing an orthodontic brace, which comprises a tooth-sleeving member, an installation member, a fixing member, an attachment member attached to a displacement-requiring tooth, and a force-applying member driving the attachment member to move. The installation member includes an attachment surface and an installation surface. The installation member is dismountably coupled to the tooth-sleeving member. In comparison with the conventional technology, while the dental malformation is more serious, the orthodontic brace of the present invention can significantly decrease the nails for enhancing anchorage or even completely abandon using nails. Through the cooperation of the installation member, the fixing member and the attachment member, the present invention provides external to move the displacement-requiring teeth and enable multidirectional displacements of the teeth, whereby to achieve an orthodontic effect. The present invention has higher utility, not only providing a better orthodontic option for patients but also simplifying the orthodontic process. Further, the present invention enables the wearer to mount and dismount the orthodontic brace by himself. Therefore, the patients are highly satisfied with using the present invention.

## Description

### Field of the Invention

The present invention relates to a medical instrument, particularly to an orthodontic brace.

### Description of the Prior Art

The orthodontics is to correct dental malformation, wherein a dental brace is worn by a patient and applies external force to displace teeth, whereby the teeth are rearranged. The conventional orthodontic brace is a metallic hoop, normally formed by assembling nickel-titanium alloy arch wires and metallic brackets. The conventional orthodontic brace can achieve a superior therapeutic effect. However, it is insufficient in esthetics and comfort. Further, the arch wires and brackets stimulate the oral cavity and cause foreign body sensation. Furthermore, the residual food debris on the arch wires and brackets is likely to breed bacteria.

In order to solve the problems of the conventional metallic dental hoop, invisible braces were developed. In comparison with the conventional orthodontic braces, the bracket-free invisible braces are safer and more comfortable. The oral cavity would not be scratched by fixing brackets because the invisible braces are free of brackets. The user can wear the invisible brace by himself. The invisible braces can be cleaned conveniently. Invisible braces are made of elastic materials. While worn on teeth, the invisible brace is elastically deformed. The resilient force of the elastic deformation drives the teeth to move. Thus is achieved the objective of the orthodontic therapy.

While the dental malformation is more serious, only wearing orthodontic brace is insufficient to achieve an orthodontic effect. The orthodontic therapy further needs to nail the gingiva so as to enhance the anchorage. In order to achieve the orthodontic objective, nailing should cooperate with accessories to provide external force to move the displacement-requiring teeth. Therefore, the concerned field is eager to have an orthodontic brace, which can achieve an orthodontic effect without nailing the gingiva.

### SUMMARY OF THE INVENTION

One objective of the present invention is to provide an orthodontic brace, which exempts the gingiva from being nailed for enhancing anchorage while the dental malformation is more serious, wherein an installation member, a fixing member and an attachment member cooperate to provide external force to the teeth needing displacement, whereby to achieve an orthodontic effect.

In order to achieve the abovementioned objective, the present invention provides an orthodontic brace, which comprises a tooth-sleeving member, an installation member, a fixing member, an attachment member and a force-applying member, wherein the attachment member is attached to a tooth needing displacement; the force-applying member is connected with the fixing member and the attachment member to drive the attachment member to undertake displacement; the installation member includes an attachment surface attached to a gingiva and an installation surface where the fixing member is installed; the installation member is dismountably coupled to the tooth-sleeving member.

In comparison with the conventional technology, the present invention can exempt the gingiva from being nailed for enhancing anchorage while the dental malformation is more serious. The present invention uses the installation member, the fixing member and the attachment member to provide external force to move the teeth needing displacement and then achieve an orthodontic effect. The present invention has high utility, not only providing a better orthodontic option for patients but also simplifying the orthodontic process. Further, the present invention enables the wearer to mount and dismount the orthodontic brace by himself without the operation of the professional personnel. Therefore, the wearers are highly satisfied with using the present invention.

In one embodiment of the present invention, the installation member and the tooth-sleeving member are press-fit to each other.

In one embodiment of the present invention, the installation member and the tooth-sleeving member are press-fit to each other in a male-female buckling mechanism.

In one embodiment of the present invention, the fixing member and the installation member are press-fit to each other in a male-female buckling mechanism.

In one embodiment of the present invention, the tooth-sleeving member includes a first position-limiting edge; the installation member includes a second position-limiting edge; the attachment member includes an adhesive surface, a position-limiting element and a connection terminal where the force-applying member is installed; the first position-limiting edge and the second position-limiting edge are disposed corresponding to and apart from each other to form a first guiding slot, which clamps the position-limiting element and guides the position-limiting element to move.

In one embodiment of the present invention, the position-limiting element includes a first press-fit groove where the first position-limiting edge is press-fit and a second press-fit groove where the second position-limiting edge is press-fit.

In one embodiment of the present invention, the orthodontic brace further comprises a guiding structure for guiding the attachment member; the guiding structure includes a second guiding slot, which clamps the attachment member and guides the attachment member to move; the guiding structure is dismountably coupled to the tooth-sleeving member and the installation member.

In one embodiment of the present invention, the guiding structure includes a fixed shaft, a first guiding rod, a second guiding rod, and a moveable shaft; the first guiding rod and the second guiding rod are disposed parallel to and apart from each other to form the second guiding slot; one end of the first guiding rod and one end of the second guiding rod are rotatably coupled to the fixed shaft; each of another end of the first guiding rod and another end of the second guiding rod has a connection element; the moveable shaft is inserted through the connection elements and clearance-fit to the connection elements; the fixed shaft is dismountably coupled to the tooth-sleeving member, and the moveable shaft is dismountably coupled to the installation member.

In one embodiment of the present invention, each of the tooth-sleeving member and the installation member of has a male buckle; each of the moveable shaft and the fixed shaft has a female buckle; the moveable shaft is press-fit to the installation member in a male-female buckling mechanism; the fixed shaft is press-fit to the tooth-sleeving member in a male-female buckling mechanism.

The present invention also provides a tooth-attaching member, which is applied to an orthodontic brace and comprises an adhesive surface where a tooth needing displacement is connected, a position-limiting member, and a connection terminal where a force-applying device is mounted; the cross section of the position-limiting member is a rectangle or a regular polygon having an even number of sides.

In one embodiment of the present invention, the cross section of the position-limiting member is a square.

In one embodiment of the present invention, the cross section of the position-limiting member is a regular hexagon.

In one embodiment of the present invention, a positioning groove is annularly formed on an outer rim of the positioning-limiting member.

### The Efficacies of the Present Invention:

1. While a tooth needing horizontal orthodontic displacement, the force-applying member applies external force to the tooth, and the first guiding slot guides the tooth to move toward the desired direction. Thereby is achieved an orthodontic effect. Through the guiding mechanism of the present invention, the displacement-requiring tooth is constrained to move along the optimized path, whereby is raised the orthodontic efficiency and promoted the orthodontic effect.
2. Because the position-limiting element is press-fit to the first press-fit groove and the second press-fit groove, the movement of the attachment member is further constrained, and the positioning element can only be guided by the first guiding slot and moved horizontally. Thus, the positioning element is unlikely to rotate during the movement process. Therefore is greatly enhanced the stability of the orthodontic treatment, which needs to displace the tooth.
3. If the dental malformation is more serious and the heights of the teeth have larger difference, the guiding mechanism of the present invention can constrain the movement path of the displacement-requiring tooth. Thereby is more stabilized the orthodontic process of the displacement-requiring tooth.
4. Through the cooperation of several position-limiting surfaces and the second guiding slot, the angle of the attachment member can be adjusted omnidirectionally without dismounting and mounting operations, whereby is greatly increased the flexibility and utility of the orthodontic brace of the present invention. In application, according to the movement path of the displacement-requiring tooth, and considering the convenience of mounting the guiding structure, the positions of the positioning-limiting surfaces are appropriately modified, and then the attachment member is attached to the displacement-requiring tooth.

The male buckles where the guiding structure is to be press-fit are appropriately installed on the tooth-sleeving member and the installation member to set the positions where the guiding structure is to be mounted in each cycle. Thus, the preparation is completed.

Next, sleeve the teeth with the tooth-sleeving member. Next, mount the installation member on two ends of the tooth-sleeving member in a press-fit way. Thus is completed the installation of the tooth-sleeving member. Next is undertaken the installation of the guiding structure. While the guiding structure is to be installed, fixedly mount the fixed shaft on the tooth-sleeving member in a press-fit way with a male-female buckling mechanism. Next, rotate the first guiding rod and the second guiding rod to make the first guiding rod and the second guiding rod parallel to each other, whereby to form the second guiding slot. Next, clamp two limiting surfaces inside the second guiding slot. Then, the connection elements of the first guiding rod and the second guiding rod are corresponding to each other. Next, insert the moveable shaft through the connection elements and fixedly mount the moveable shaft in the installation members in a press-fit way with a male-female buckling mechanism. Thus is completed the entire installation process. Then, the operation personnel adaptively mounts the force-applying member on the fixing member and the attachment member.

Once the first orthodontic path of the displacement-requiring tooth is completed, dismount the force-applying member and the guiding structure, and next mount the guiding structure to the second orthodontic path, and then adaptively mount the force-applying member on the fixing member and the attachment member. Thus, a new cycle of orthodontic treatment starts. The abovementioned process is undertaken cyclically until the orthodontic treatment for the displacement-requiring teeth is completed.

### BRIEF DESCRIPTION OF THE DRAWINGS

Fig.1 is a diagram schematically showing the structure of an orthodontic brace according to Embodiment I of the present invention.
Fig.2 is a diagram schematically showing an attachment member according to Embodiment I of the present invention.
Fig.3 is a diagram schematically showing the structure of an orthodontic brace according to Embodiment II of the present invention.
Fig.4 is a diagram schematically showing a guiding structure according to Embodiment II of the present invention.
Fig.5 is a diagram schematically showing the structure of an orthodontic brace according to Embodiment III of the present invention.
Fig.6 is a diagram schematically showing a positioning groove according to Embodiment III of the present invention.

### DETAILED DESCRIPTION OF THE INVENTION

Below, embodiments are described in detail in cooperation with the attached drawings to clearly and fully demonstrate the technical schemes of the present invention. However, the embodiments described in the specification are not all the embodiments of the present invention but only a portion of the embodiments of the present invention. Any variation or modification made by the person having ordinary knowledge in the art according the spirit and/or embodiments of the present invention is to be included by the scope of the present invention.

It should be understood: the terms used to indicate directions or relative positions in the specification, such as "central", "vertical", "horizontal", "length", "width, "thickness", "upper", "lower", "front", "rear", "left", "right", "longitudinal", "level", "top", "bottom", "inner", "outer", "clockwise" and "counterclockwise", are only to describe the present invention simply and conveniently. They are not intended to indicate or imply that the involved element or device must be orientated toward a specified direction or must be operated in a specified direction. Therefore, the present invention would not be limited by these terms.

Besides, the terms "first", "second", etc. are not used to indicate or imply the priorities of the involved technical characteristics but simply used to distinguish similar but different technical characteristics. The terms "first", "second", etc. may indicate or imply that at least one or more involved technical characteristics exist in the present invention. Further, "a plurality of', "several", etc. indicate that two or more involved technical characteristics exist in the present invention unless there is a more specified limitation.

In the present invention, the terms, such as "install", "connect", "couple", "fix", "fit", etc., should be interpreted in a broad sense. For example, A may be connected with B fixedly, dismountably, integrally, mechanically or electrically; A may be connected with B directly or through a medium; A may be connected with B through the interconnection or interaction thereof. According to the specific conditions, the person having ordinary knowledge in the art should be able to appreciate the exact meaning of these terms in the present invention.

Unless it is specified or limited alternatively, "the first characteristic is above or below the second characteristic" may mean "the first characteristic is above the second characteristic" may mean "the first characteristic directly contacts the second characteristic" or "the first characteristic does not directly contact the second characteristic but indirectly contact the second characteristic through another characteristic therebetween". Besides, "the first characteristic is above the second characteristic" may mean "the first characteristic is exactly above the second characteristic", "the first characteristic is obliquely above the second characteristic", or "the level of the first characteristic is higher than the level of the second characteristic. Further, "the first characteristic is below the second characteristic" may mean "the first characteristic is exactly below the second characteristic", "the first characteristic is obliquely below the second characteristic", or "the level of the first characteristic is lower than the level of the second characteristic.

### Embodiment I

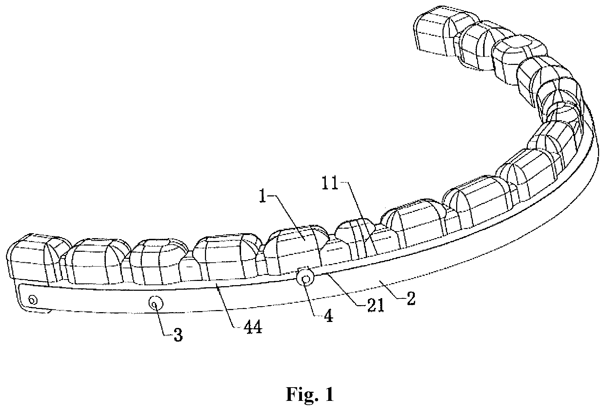

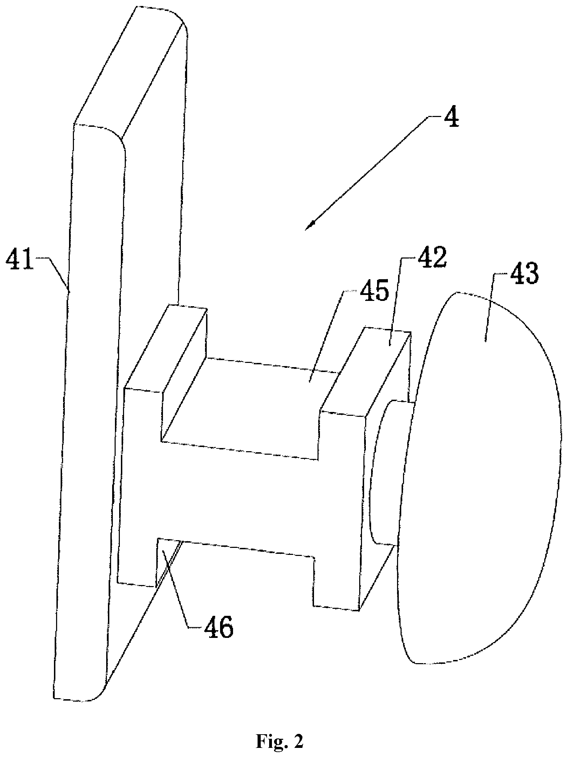

Refer to Fig.1 and Fig.2. Fig.1 is a diagram schematically showing the structure of an orthodontic brace according to Embodiment I of the present invention. Fig.2 is a diagram schematically showing an attachment member 4 according to Embodiment I of the present invention. In embodiment I, the orthodontic brace of the present invention comprises a tooth-sleeving member 1, an installation member 2, a fixing member 3, an attachment member 4 attached to a tooth requiring displacement, and a force-applying member connected with the fixing member 3 and the attachment member 4.

The tooth-sleeving member 1 sleeves a tooth of a patient. The tooth-sleeving member 1 generates wrapping force to the sleeved tooth; the wrapping force results in a fixing effect to the entire tooth-sleeving member 1. The tooth-sleeving member 1 may be in form of a semi-sleeve device or a full-sleeve device according to requirement. In Embodiment I, the tooth-sleeving member 1 is exemplified by a semi-sleeve device. In details, the tooth-sleeving member 1 is mounted on the upper half of a tooth of a patient. It should be explained herein: the brace itself has the orthodontic effect, and the orthodontic technology thereof has been well known and will not repeat herein.

The installation member 2 includes an attachment surface attached to a gingiva and an installation surface where the fixing member 3 is installed. The attachment surface is in form of an arc shape and attached to the gingiva of the lower jaw of a patient. The installation member 2 is dismountably coupled to the tooth-sleeving member 1. In details, both the two ends of the installation member 2 are dismountably coupled to the tooth-sleeving member 1. The installation member 2 may be coupled to the tooth-sleeving member 1 in a screwing mechanism or a press-fit mechanism. In Embodiment I, the installation member 2 is coupled to the tooth-sleeving member 1 in a press-fit mechanism. In details, the installation member 2 is coupled to the tooth-sleeving member 1 in a male-female buckling mechanism.

It should be explained: in Embodiment I, the teeth needing orthodontia are exemplified by a portion of the teeth of the lower jaw. Therefore, it is the teeth of the lower jaw that are sleeved by the tooth-sleeving member 1. However, the exemplary case is only to illustrate the present invention conveniently. In the present invention, while the tooth-sleeving member is disposed reversely, the orthodontic brace of the present invention can be used to perform the orthodontia of the teeth of the upper jaw.

The force-applying member (not shown in the drawings) is more likely to be an existing thing. The force-applying member is normally a rubber-strip force-applying device or a screw force-applying device. The force-applying member is mainly connected with the fixing member 3 and the attachment member 4, providing pushing force or pulling force to the attachment member 4 and driving the teeth to move, whereby to achieve an orthodontic effect. As the force-applying member belongs to the prior art, it will not be introduced herein.

In an example, while the orthodontic brace of the present invention is to be used, the attachment member 4 is attached to a displacement-requiring tooth beforehand. Next, the tooth is sleeved by the tooth-sleeving member 1. Next, the installation member 2 is mounted on two ends of the tooth-sleeving member 1 in a press-fit mechanism. Thus is completed the installation of the orthodontic brace. Then, the operation personnel adaptively installs the force-applying member in the fixing member 3 and the attachment member 4.

Through the abovementioned design of the present invention, even though the dental malformation is more serious, it is unnecessary to nail the gingiva for enhancing anchorage. The cooperation of the installation member 2, the fixing member 3 and the attachment member 4 provides external force to move the displacement-requiring tooth and thus achieves an orthodontic effect. The present invention has high utility, not only providing a better orthodontic option for patients but also simplifying the orthodontic process. Further, the present invention enables the wearer to mount and dismount the orthodontic brace by himself without the operation of the professional personnel. Therefore, the wearers are highly satisfied with using the present invention.

In an improved version of Embodiment I, the tooth-sleeving member 1 includes a first position-limiting edge 11; the installation member 2 includes a second position-limiting edge 21; the attachment member 4 includes an adhesive surface 41, a position-limiting element 42 and a connection terminal 43 where the force-applying member is installed; the first position-limiting edge 11 and the second position-limiting edge 12 are disposed corresponding to and apart from each other to form a first guiding slot 44, which clamps the position-limiting element 42 and guides the position-limiting element 42 to move.

It should be explained: the guiding design between the first guiding slot 44 and the position-limiting element 42 can guide the movement direction of the tooth.

In an example, while the displacement-requiring tooth needs horizontal orthodontic treatment, the tooth is moved toward the desired direction to obtain the desired orthodontic effect through the external force applied by the force-applying member and the guiding of the first guiding slot 44. Via such a guiding design, the displacement-requiring tooth is constrained to move along the optimized path. Therefore, the present invention not only increases the orthodontic efficiency but also directly enhances the final orthodontic effect.

Furthermore, the position-limiting element 42 includes a first press-fit groove 45 where the first position-limiting edge 11 is press-fit and a second press-fit groove 46 where the second position-limiting edge 21 is press-fit. Through the press-fit constraint of the first press-fit groove 45 and the second press-fit groove 46, the movement of the attachment member 4 is further constrained. Under the guiding of the first guiding slot 44, the position-limiting element 42 cannot rotate but can only move parallel during the movement process. Thus is greatly improved the stability of the orthodontic process of the displacement-requiring tooth.

### Embodiment II

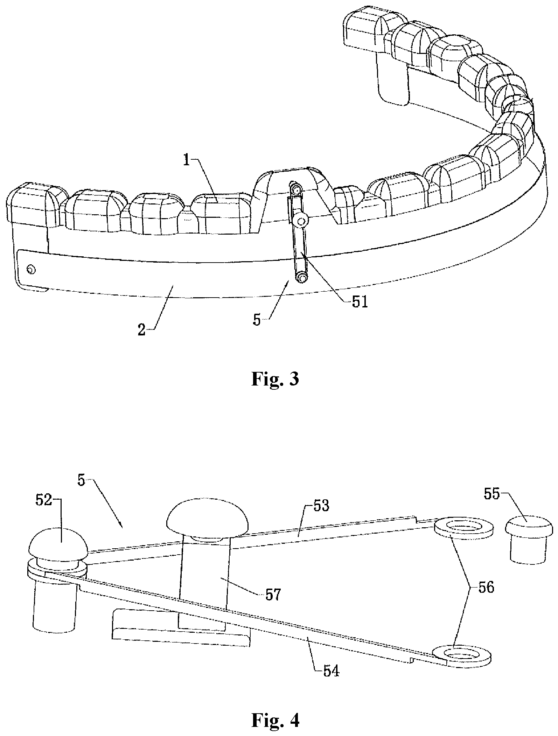

Refer to Fig.3 and Fig.4. Fig.3 is a diagram schematically showing the structure of an orthodontic brace according to Embodiment II of the present invention. Fig.4 is a diagram schematically showing a guiding structure 5 according to Embodiment II of the present invention. In embodiment II, the orthodontic brace of the present invention comprises a tooth-sleeving member 1, an installation member 2, a fixing member, an attachment member 4 attached to a tooth requiring displacement, and a force-applying member connected with the fixing member and the attachment member 4.

The tooth-sleeving member 1 sleeves a tooth of a patient. The tooth-sleeving member 1 generates wrapping force to the sleeved tooth; the wrapping force results in a fixing effect to the entire tooth-sleeving member 1. The tooth-sleeving member 1 may be in form of a semi-sleeve device or a full-sleeve device according to requirement. In Embodiment II, the tooth-sleeving member 1 is exemplified by a semi-sleeve device. In details, the tooth-sleeving member 1 is mounted on the upper half of a tooth of a patient.

The installation member 2 includes an attachment surface attached to a gingiva and an installation surface where the fixing member is installed. The attachment surface is in form of an arc shape and attached to the gingiva of the lower jaw of a patient. The installation member 2 is dismountably coupled to the tooth-sleeving member 1. In details, both the two ends of the installation member 2 are dismountably coupled to the tooth-sleeving member 1. The installation member 2 may be coupled to the tooth-sleeving member 1 in a screwing mechanism or a press-fit mechanism. In Embodiment II, the installation member 2 is coupled to the tooth-sleeving member 1 in a press-fit mechanism. In details, the installation member 2 is coupled to the tooth-sleeving member 1 in a male-female buckling mechanism.

It should be explained: in Embodiment II, the teeth needing orthodontia are exemplified by a portion of the teeth of the lower jaw. Therefore, what the tooth-sleeving member 1 sleeves is the teeth of the lower jaw. However, the exemplary case is only to illustrate the present invention conveniently. In the present invention, while the tooth-sleeving member is disposed reversely, the orthodontic brace of the present invention can be used to perform the orthodontia of the teeth of the upper jaw. It should be explained herein: the brace itself has the orthodontic effect, and the orthodontic technology thereof has been well known and will not repeat herein.

The force-applying member is more likely to be an existing thing. The force-applying member is normally a rubber-strip force-applying device or a screw force-applying device. The force-applying member is mainly connected with the fixing member and the attachment member 4, providing pushing force or pulling force to the attachment member 4 and driving the teeth to move, whereby to achieve an orthodontic effect. As the force-applying force member belongs to the prior art, it will not be introduced herein.

In Embodiment II, the orthodontic brace of the present invention further comprises a guiding structure 5 used to guide the movement of the attachment member 4. The guiding structure 5 includes a second guiding slot 51, which clamps the attachment member 4 and guides the attachment member 4 to move. The guiding structure 5 may be dismountably coupled to the tooth-sleeving member 1 and the installation member 2.

The guiding structure 5 further includes a fixed shaft 52, a first guiding rod 53, a second guiding rod 54, and a moveable shaft 55. The first guiding rod 53 and the second guiding rod 54 are disposed parallel to and apart from each other to form the second guiding slot 51. One end of the first guiding rod 53 and one end of the second guiding rod 54 are rotatably coupled to the fixed shaft 52. Each of another end of the first guiding rod 53 and another end of the second guiding rod 54 has a connection element 56, which is integrated with the first guiding rod 53/the second guiding rod 54. The moveable shaft 55 is inserted through the connection elements 56 and clearance-fit to the connection elements 56. The fixed shaft 52 is dismountably coupled to the tooth-sleeving member 1. The moveable shaft 55 is dismountably coupled to the installation member 2. It should be explained: the coupling may be in a screwing mechanism or a press-fit mechanism. In Embodiment II, the coupling is in a press-fit mechanism. In details, male buckles are respectively fixedly installed on the tooth-sleeving member 1 and the installation member 2; female buckles are respectively fixedly installed on the fixed shaft 52 and the moveable shaft 55; the installation member 2 and the moveable shaft 55 are press-fit to each other in a male-female buckling mechanism; the tooth-sleeving member 1 and the fixed shaft 52 are press-fit to each other in a male-female buckling mechanism.

It should be explained: the fixing member may be the fixed shaft 52 or the moveable shaft 55. In Embodiment II, the fixing member is the fixed shaft 52; the force-applying member is coupled to the fixed shaft 52 and the attachment member 4, providing pushing force or pulling force to the attachment member 4 and driving the tooth to move.

In an example, while the orthodontic brace of the present invention is to be used, the attachment member 4 is attached to a displacement-requiring tooth beforehand. Next, the tooth is sleeved by the tooth-sleeving member 1. Next, the installation member 2 is mounted on two ends of the tooth-sleeving member 1 in a press-fit mechanism. Thus is completed the installation of the orthodontic brace. Next, mount the guiding structure 5. Firstly, fixedly mount the fixed shaft in the tooth-sleeving member 1 in a male-female buckling mechanism. Next, rotate the first guiding rod 53 and the second guiding rod 54 to make the first guiding rod 53 and the second guiding rod 54 become parallel to each other and form the second guiding slot 51. Next, clamp the attachment member 4 inside the second guiding slot 51. Then, let the connection elements 56 of the first guiding rod 53 and the second guiding rod 54 corresponding to each other. Next, insert the moveable shaft 55 through the connection elements 56 and secure the moveable shaft 55 to the installation member 2 in a male-female buckling mechanism. Thus is completed the entire installation process. Then, the operation personnel mounts the force-applying member to the fixed shaft 52 and the attachment member 4. Through the abovementioned design of the present invention, even though the dental malformation is more serious, it is unnecessary to nail the gingiva for enhancing anchorage. The cooperation of the installation member 2, the fixing member 3 and the attachment member 4 provides external force to move the displacement-requiring tooth and thus achieves an orthodontic effect. Embodiment II is suitable to a case that the dental malformation is more serious and the heights of the teeth have larger difference. The present invention has high utility, not only providing a better orthodontic option for patients but also simplifying the orthodontic process. Further, the present invention enables the wearer to mount and dismount the orthodontic brace by himself without the operation of the professional personnel. Therefore, the wearers are highly satisfied with using the present invention.

If the dental malformation is more serious and the heights of the teeth have larger difference, the guiding mechanism of the present invention can constrain the movement path of the displacement-requiring tooth. Thereby is more stabilized the orthodontic process of the displacement-requiring tooth.

It should be explained: the motion path of the displacement-requiring tooth needs adaptability; therefore, it should be after the motion path of the displacement-requiring tooth has be determined that the male buckles of the tooth-sleeving member 1 and the installation member 2 are installed to settle the physical mounting position of the guiding structure 5. The mounting may be realized in an adhesion method or a press-fit method. The present invention does not particularly limit the mounting method.

### Embodiment III

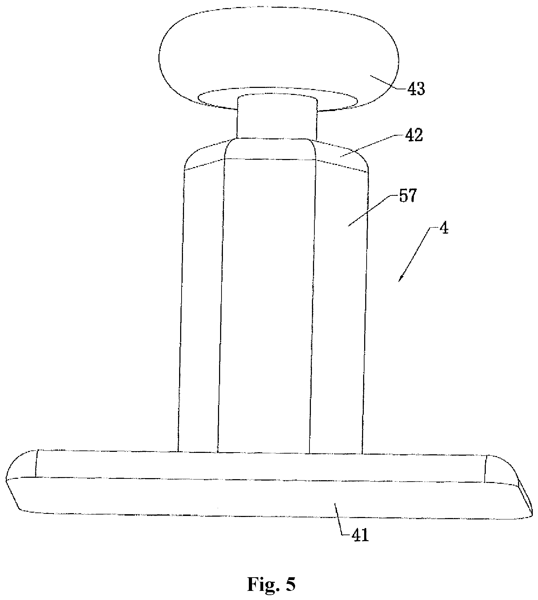

Refer to Fig.3, Fig.4 and Fig.5. Fig.3 is a diagram schematically showing the structure of an orthodontic brace according to Embodiment II of the present invention. Fig.4 is a diagram schematically showing a guiding structure 5 according to Embodiment II of the present invention. Fig.5 is a diagram schematically showing the structure of an orthodontic brace according to Embodiment III of the present invention. In embodiment III, the orthodontic brace of the present invention comprises a tooth-sleeving member 1, an installation member 2, a fixing member 3, an attachment member 4 attached to a tooth requiring displacement, and a force-applying member connected with the fixing member 3 and the attachment member 4.

The tooth-sleeving member 1 sleeves a tooth of a patient. The tooth-sleeving member 1 generates wrapping force to the sleeved tooth; the wrapping force results in a fixing effect to the entire tooth-sleeving member 1. The tooth-sleeving member 1 may be in form of a semi-sleeve device or a full-sleeve device according to requirement. In Embodiment III, the tooth-sleeving member 1 is exemplified by a semi-sleeve device. In details, the tooth-sleeving member 1 is mounted on the upper half of a tooth of a patient. It should be explained herein: the brace itself has the orthodontic effect, and the orthodontic technology thereof has been well known and will not repeat herein.

The installation member 2 includes an attachment surface attached to a gingiva and an installation surface where the fixing member is installed. The attachment surface is in form of an arc shape and attached to the gingiva of the lower jaw of a patient. The installation member 2 is dismountably coupled to the tooth-sleeving member 1. In details, both the two ends of the installation member 2 are dismountably coupled to the tooth-sleeving member 1. The installation member 2 may be coupled to the tooth-sleeving member 1 in a screwing mechanism or a press-fit mechanism. In Embodiment III, the installation member 2 is coupled to the tooth-sleeving member 1 in a press-fit mechanism. In details, the installation member 2 is coupled to the tooth-sleeving member 1 in a male-female buckling mechanism.

It should be explained: in Embodiment III, the teeth needing orthodontia are exemplified by a portion of the teeth of the lower jaw. Therefore, what the tooth-sleeving member 1 sleeves is the teeth of the lower jaw. However, the exemplary case is only to illustrate the present invention conveniently. In the present invention, while the tooth-sleeving member is disposed reversely, the orthodontic brace of the present invention can be used to perform the orthodontia of the teeth of the upper jaw_{.}

The force-applying member is more likely to be an existing thing. The force-applying member is normally a rubber-strip force-applying device or a screw force-applying device. The force-applying member is mainly connected with the fixing member and the attachment member 4, providing pushing force or pulling force to the attachment member 4 and driving the teeth to move, whereby to achieve an orthodontic effect. As the force-applying force belongs to the prior art, it will not be introduced herein.

In Embodiment III, the orthodontic brace of the present invention further comprises a guiding structure 5 used to guide the movement of the attachment member 4. The guiding structure includes a second guiding slot 51, which clamps the attachment member 4 and guides the attachment member 4 to move. The guiding structure may be dismountably coupled to the tooth-sleeving member 1 and the installation member 2. The guiding structure 5 further includes a fixed shaft 52, a first guiding rod 53, a second guiding rod 54, and a moveable shaft 55. The first guiding rod 53 and the second guiding rod 54 are disposed parallel to and apart from each other to form the second guiding slot 51. One end of the first guiding rod 53 and one end of the second guiding rod 54 are rotatably coupled to the fixed shaft 52. Each of another end of the first guiding rod 53 and another end of the second guiding rod 54 has a connection element 56, which is integrated with the first guiding rod 53/the second guiding rod 54. The moveable shaft 55 is inserted through the connection elements 56 and clearance-fit to the connection elements 56. The fixed shaft 52 is dismountably coupled to the tooth-sleeving member 1. The moveable shaft 55 is dismountably coupled to the installation member 2.

It should be explained: the fixing member may be the fixed shaft 52 or the moveable shaft 55. In Embodiment III, the fixing member is the fixed shaft 52; the force-applying member is coupled to the fixed shaft 52 and the attachment member 4, providing pushing force or pulling force to the attachment member 4 and driving the tooth to move.

It should be explained: the coupling may be in a screwing mechanism or a press-fit mechanism. In Embodiment III, the coupling is in a press-fit mechanism. In details, male buckles are respectively fixedly installed on the tooth-sleeving member 1 and the installation member 2; female buckles are respectively fixedly installed on the fixed shaft 52 and the moveable shaft 55; the installation member 2 and the moveable shaft 55 are press-fit to each in a male-female buckling mechanism; the tooth-sleeving member 1 and the fixed shaft 52 are press-fit to each other in a male-female buckling mechanism. Besides, the motion path of the displacement-requiring tooth needs adaptability. Therefore, it should be after the motion path of the displacement-requiring tooth has be determined that the male buckles of the tooth-sleeving member 1 and the installation member 2 are installed to settle the physical mounting position of the guiding structure 5. The mounting may be realized in an adhesion method or a press-fit method. The present invention does not particularly limit the mounting method. If the displacement-requiring tooth needs several motion paths, a plurality of male buckles need to be adaptably installed to settle the physical mounting position of the guiding structure 5 in each cycle of installation.

In an improved version of Embodiment III, the attachment member 4 includes an adhesive surface 41, a position-limiting element 42 and a connection terminal 43 where the force-applying member is installed. In the present invention, the cross section of the position-limiting member 42 is a rectangle or a regular polygon having an even number of sides. In Embodiment III, the cross section of the position-limiting member 42 is a regular hexagon.

It is the guiding principle of the guiding structure 5: the second guiding slot 51, which is in a parallel form, constrains the sliding direction of the position-limiting member 42 from the lateral sides thereof. Two opposite and parallel lateral sides of the position-limiting member 42 are position-limiting surfaces 57. The two position-limiting surfaces 57 closely contact the inner walls of the second guiding slot 51. Therefore, the entire position-limiting member 42 cannot rotate but can only move along the lengthwise direction of the second guiding slot 51. The attachment member 4 is mounted onto the displacement-requiring tooth through the adhesive surface 41. Once the attachment member 4 is mounted onto the displacement-requiring tooth, it is unsuitable to adjust the position of the attachment member 4. While the orthodontic path of the displacement-requiring tooth is not a straight line, the position of attachment member 4 needs to be adjusted from several angles. In such a case, the position-limiting member 42, which has several position-limiting surfaces 57 respectively facing different directions, should convenience the installation of the guiding structure 5. Through the cooperation of the second guiding slot 51, the position and angle of the attachment member 4 can be adjusted multidirectionally without any dismounting operation. Therefore is greatly increased the flexibility and utility of the orthodontic brace of the present invention.

### Exemplary Practical Operation Process

While the orthodontic brace of the present invention is to be used, appropriately adjust the positions of the position-limiting surfaces 57 of the attachment member 4 according to the motion paths required by the displacement-requiring tooth and considering the convenience of mounting the guiding structure 5. Next, fixedly attach the attachment member 4 onto the displacement-requiring tooth. Next, adaptively mount male buckles on the tooth-sleeving member 1 and the installation member 2 for the press-fitting connection of the guiding structure 5, whereby to settle the positions where the guiding structure 5 is to be installed in different cycles of installation. Thus is completed the preparation process. Next, sleeve the teeth with the tooth-sleeving member 1. Next, mount the installation member 3 to two ends of the tooth-sleeving member 1 in a press-fit mechanism. Thus is completed the installation of the orthodontic brace. Next, undertake the installation of the guiding structure 5. In the installation of the guiding structure 5, fixedly install the fixed shaft on the tooth-sleeving member 1 in a male-female buckling mechanism. Next, rotate the first guiding rod 53 and the second guiding rod 54 to make the first guiding rod 53 and the second guiding rod 54 parallel to each other and form the second guiding slot 51. Next, make the second guiding slot 51 clamp two position-limiting surfaces 57 thereinside and make the connection elements 56 of the first guiding rod 53 and the second guiding rod 54 corresponding to each other. Next, insert the moveable shaft 55 through the connection elements 56 and fixedly install the moveable shaft 55 in the installation member 2 in a male-female buckling mechanism. Thus is completed the entire installation process. Then, the operation personnel adaptively mounts the force-applying member onto the fixed shaft 52 and the attachment member 4.

Once the orthodontia of the first section of the orthodontic path of the displacement-requiring tooth is completed, dismount the force-applying member and the guiding structure 5, and then mount the guiding structure 5 to the second section of the orthodontic path, and then adaptively mount the force-applying member to the fixed shaft 52 and the attachment member 4. The abovementioned process is cyclically undertaken until the orthodontia of the displacement-requiring tooth is completed.

Through the abovementioned design of the present invention, even though the dental malformation is more serious, it is unnecessary to nail the gingiva for enhancing anchorage. The cooperation of the installation member 2, the fixed shaft 52 and the attachment member 4 provides external force to move the displacement-requiring tooth and thus achieves an orthodontic effect. Embodiment III is suitable to a case that the dental malformation is more serious and the heights of the teeth have larger difference. The present invention has high utility, not only providing a better orthodontic option for patients but also simplifying the orthodontic process. Further, the present invention enables the wearer to mount and dismount the orthodontic brace by himself without the operation of the professional personnel. Therefore, the wearers are highly satisfied with using the present invention.

### Embodiment IV

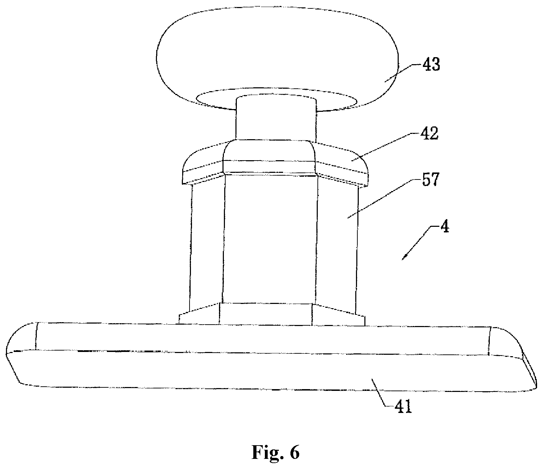

Refer to Fig.5 and Fig.6. Fig.5 is a diagram schematically showing the structure of an orthodontic brace according to Embodiment III of the present invention. Fig.6 is a diagram schematically showing a positioning groove according to Embodiment III of the present invention. In embodiment IV, the present invention further provides an attachment member 4, which is applied to an orthodontic brace and attached to a tooth requiring displacement. The attachment member 4 includes an adhesive surface 41 attached to a displacement-requiring tooth, a position-limiting element 42 and a connection terminal 43 where the force-applying member is installed. The cross section of the position-limiting member 42 is a rectangle or a regular polygon having an even number of sides. In embodiment IV, the cross section of the position-limiting member is a regular hexagon. It is the guiding principle of the guiding structure 5: constraining the sliding direction of the position-limiting member 42 from the lateral sides thereof. Two opposite and parallel lateral sides of the position-limiting member 42 are position-limiting surfaces 57.

In an improved version of Embodiment IV, a positioning groove is annularly formed on an outer rim of the positioning-limiting member 42. The guiding structure 5 may be press-fit into the positioning groove to increase the stability of moving the positioning-limiting member 42.

It should be explained: in Embodiment IV, the guiding structure may be the guiding structure 5 mentioned above or an orthodontic steel wire. The cross section of the positioning groove is dependent on the selection of the guiding structure. The cross section of the positioning groove allows the orthodontic component of the guiding structure to be press-fit into the positioning groove. Thereby, the displacement of the teeth will be more stable. Suppose that an orthodontic steel wire is used as the guiding structure. The cross section of an orthodontic steel wire may be a circle, a rectangle, or another shape. In such a case, the shape of the positioning groove should match the shape of the orthodontic steel wire.

### Embodiment V

The present invention also proposes a computer-aided-manufacturing (CAM) for a transparent orthodontic brace, which comprises
Step S1: using a computed-tomography (CT) apparatus or an ultrasonic apparatus to scan the upper jaw and lower jaw of a patient;
Step S2: taking the front view and side view of the patient, taking the side-view x-ray films of the skull of the patient, and taking dental panoramic x-ray films of the patient;
Step S3: scanning the oral cavity of the patient to form a 3D model;
Step S4: uploading the 3D model obtained in Step S3 to an orthodontic software;
Step S5: designing an orthodontic process manually or in an artificial intelligence technology in the software according to the data obtained in Step S1 and Step S2, wherein the operation personnel may adjust the positions and/or directions of the displacements of the teeth, and/or add different accessories or enhancing components to the teeth in the software, whereby to work out a step-by-step orthodontic plan for the patient;
Step S6: generating 3D simulation models of different therapeutic stages in the software;
Step S7: inputting the3D simulation models, which are obtained in Step S6, to a 3D printing apparatus to generate corresponding dental molds; and
Step S8: generating a corresponding transparent brace in a vacuum suction technology, a 3D printing technology or a casting technology in cooperation with the attachment member and/or guiding structure mentioned in Embodiments I-IV.

## Claims

1. An orthodontic brace, **characterized in** comprising a tooth-sleeving member, an installation member, a fixing member, an attachment member attached to a tooth requiring displacement, and a force-applying member connected with the fixing member and the attachment member to drive the attachment member to undertake displacement, wherein the installation member includes an attachment surface attached to a gingiva and an installation surface where the fixing member is installed, and wherein the installation member is dismountably coupled to the tooth-sleeving member.

2. The orthodontic brace according to claim 1, **characterized in that** the installation member and the tooth-sleeving member are press-fit to each other.

3. The orthodontic brace according to claim 2, **characterized in that** the installation member and the tooth-sleeving member are press-fit to each other in a male-female buckling mechanism.

4. The orthodontic brace according to claim 1, **characterized in that** the fixing member and the installation member are press-fit to each other in a male-female buckling mechanism.

5. The orthodontic brace according to any one of claims 1-4, **characterized in that** the tooth-sleeving member includes a first position-limiting edge, and that the installation member includes a second position-limiting edge, and that the attachment member includes an adhesive surface, a position-limiting element and a connection terminal where the force-applying member is installed, wherein the first position-limiting edge and the second position-limiting edge are corresponding to and apart from each other to form a first guiding slot, which clamps the position-limiting element and guides the position-limiting element to move.

6. The orthodontic brace according to claim 5, **characterized in that** the position-limiting element includes a first press-fit groove where the first position-limiting edge is press-fit and a second press-fit groove where the second position-limiting edge is press-fit.

7. The orthodontic brace according to any one of claims 1-4, **characterized in** further comprising a guiding structure for guiding the attachment member, wherein the guiding structure includes a second guiding slot, which clamps the attachment member and guides the attachment member to move, and wherein the guiding structure is dismountably coupled to the tooth-sleeving member and the installation member.

8. The orthodontic brace according to claim 7, **characterized in that** the guiding structure includes a fixed shaft, a first guiding rod, a second guiding rod, and a moveable shaft,
wherein the first guiding rod and the second guiding rod are disposed parallel to and apart from each other to form the second guiding slot, and
wherein one end of the first guiding rod and one end of the second guiding rod are rotatably coupled to the fixed shaft, and another end of the first guiding rod and another end of the second guiding rod respectively have connection elements, and
wherein the moveable shaft is inserted through the connection elements and clearance-fit to the connection elements, and
wherein the fixed shaft is dismountably coupled to the tooth-sleeving member, and the moveable shaft is dismountably coupled to the installation member.

9. The orthodontic brace according to claim 8, **characterized in that** each of the tooth-sleeving member and the installation member of has a male buckle, and each of the moveable shaft and the fixed shaft has a female buckle, wherein the moveable shaft is press-fit to the installation member in a male-female buckling mechanism, and the fixed shaft is press-fit to the tooth-sleeving member in a male-female buckling mechanism.

10. An attachment member for an orthodontic brace, **characterized in** comprising an adhesive surface where a tooth needing displacement is attached, a position-limiting member, and a connection terminal where a force-applying device is mounted, wherein a cross section of the position-limiting member is a polygon, and each side of the polygon is parallel to an opposite side thereof.

11. The tooth-attaching member for an orthodontic brace according to claim 10, **characterized in that** the cross section of the position-limiting member is a square.

12. The tooth-attaching member for an orthodontic brace according to claim 10, **characterized in that** the cross section of the position-limiting member is a regular hexagon.

13. The tooth-attaching member for an orthodontic brace according to any one of claims 10-12, **characterized in that** a positioning groove is annularly formed on an outer rim of the positioning-limiting member.
